# EUROPEAN PATENT SPECIFICATION

(11) **EP 1 704 991 B1**
(45) Date of publication and mention of the grant of the patent: **20.01.2010**
(21) Application number: 04807912.3
(22) Date of filing: 27.12.2004
(51) Int. Cl.: B29D 30/16

(54) **METHOD OF MANUFACTURING TIRE**
REIFENHERSTELLUNGSVERFAHREN
PROCEDE DE FABRICATION D'UN PNEU

(30) Priority: 13.01.2004 JP 2004005339
(43) Date of publication of application: 27.09.2006
(73) Proprietor: Bridgestone Corporation, Tokyo 104-8340 (JP)
(72) Inventor: OGAWA, Yuichiro, c/o Bridgestone Corporation, Kodaira-shi, Tokyo 1878531 (JP)
(74) Representative: Whalley, Kevin
(86) International application number: PCT/JP2004/019557
(87) International publication number: WO 2005/068166

(56) References cited:
- EP-A- 0 778 161
- EP-A- 1 002 668
- EP-A- 1 101 597
- WO-A1-02/30691
- WO-A1-02/083424
- WO-A1-03/089258
- FR-A- 2 286 014
- JP-A- 5 042 803
- JP-A- 8 175 122
- JP-A- 9 155 991
- JP-A- 2000 142 042
- JP-A- 2003 159 909
- JP-A- 2003 528 761
- JP-A- 2005 022 537
- US-A- 3 509 930
- US-A- 6 022 434
- US-A1- 2002 009 608

## Description

The present invention relates to a method for manufacturing tires and, in particular, to a method of forming, upon building of a green tire, two or more carcass plies on the surface of a substantially toroidal core comprised, in many instances, of a rigid material.

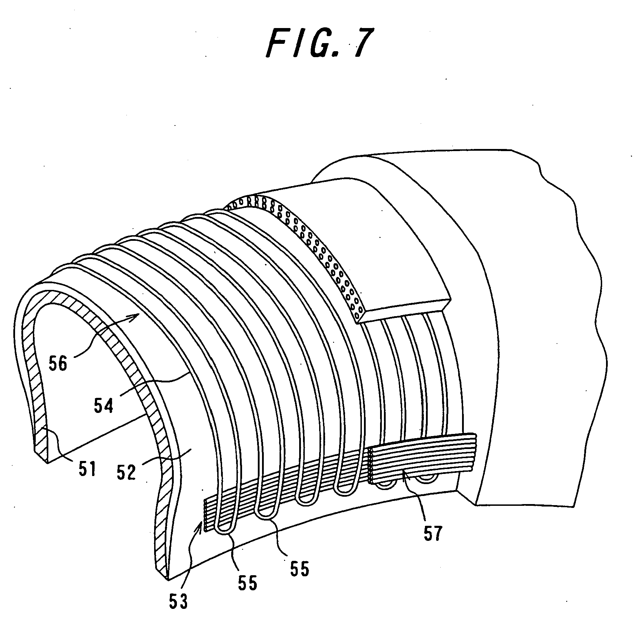

There is known a method in which inner liners, carcass plies, belt layers, tread rubber, etc., are formed on a rigid core with a toroidal shape, having an outer surface that corresponds to the inner surface shape of the product tire. In this instance, as shown in a perspective view of FIG 7, an inner liner 52 is formed on the outer surface of the rigid core 51, and an inner bead layer 53 is formed on an inner peripheral region at a side portion of the rigid core 51 by continuously winding, in the circumferential direction of the core 1, a bead wire in a spiral manner, for example. A carcass cord 54 is then applied onto the core 1 over its crown portion and side portions, so as to extend in the meridian direction of the core 1. A substantially U-shaped folded portion 55 is formed by folding back the carcass cord 54 at a region on the radially inner side of the inner bead layer 53, in combination with an indexing movement of the core 51 in the circumferential direction, by a predetermined angular range. These steps are repeated over an entire periphery of the core 1 until formation of a carcass ply 56 is completed, which is comprised of one or more continuous carcass cords 54. An outer bead layer 57 is formed at a radial position corresponding to the inner bead layer 53, by a similar winding of another bead wire. The inner and outer divided bead layers 53 and 57 are arranged in pairs so as to anchor the radially inner end portion of the carcass ply 56.

Furthermore, Patent Document 1 (Japanese Patent Application Laid-open Publication No. JP 11-115420 A) proposes to form two or more carcass plies on a core by shifting the circumferential position of the carcass cord, so as to provide an overlapping region between the carcass plies, at the folding back position of the cords, and to thereby improve the withdrawal resistance of the carcass cord from the clamped position between the bead wire layers.
- Patent Document 1: Japanese Patent Application Laid-open Publication No. JP 11-115420A (EP-0 897 813 A) Attention is also drawn to the disclosures of EP-A-0778161; EP-A-1101597; FR-A-2286014; US-A-6022434; US2002/009608A; US-A-3509930; EP-A-1002668; JP-08-175122A; JP-05-042803A; WO03/089258A JP-2003-159909A; JP-2000-142042A; WO02/083424A WO02/30691A JP-2003-528761A; JP-A-9-155991; JP-2005-022537A.

Since the conventional technology as mentioned above is intended to provide tensile strength of the carcass plies, by anchoring the radially inner end portion of the carcass plies between a pair of inner and outer bead layers, it would be difficult to sufficiently improve the tensile strength of the carcass plies in a product tire. Thus, there may arise a problem of poor lateral rigidity of the tire as compared to widely used tires of general structure, thereby causing degradation in response characteristic of the tire upon lane change of the vehicle, for example. Furthermore, due to insufficient tensile strength of the carcass plies, it would be difficult to apply the conventional technology to the production of large-sized tires.

Moreover, in the conventional structure in which the carcass plies are anchored between the bead layers, the rigidity of the bead portion in a product tire cannot be sufficiently improved. Thus, there may arise a further problem that when the structure is applied to a run-flat tire in which the wheel load upon puncture of the tire is supported by reinforcing rubbers that are arranged on the inner surface side of the sidewall portions, the bead bases of the tire tend to undergo a premature dislocation into the well of the rim during the so-called run-flat running.

The present invention has been conceived in view of these problems of the prior art. Thus, it is an object of the present invention to provide a method for manufacturing tires so that the carcass plies of the tire built on a toroidal core have a sufficiently high tensile strength, thereby avoiding degradation in lateral rigidity of the tire and allowing production of large-sized tires, while significantly improving the rigidity of the bead portions so as to eliminate or substantially mitigate the risk of dislocation of the bead portions into the well of the rim during the run-flat running.

According to the present invention, there is provided a method for manufacturing tires according to claim 1.

Particular embodiments of the invention are the subject of the dependent claims.

It is preferred that the outer carcass ply of the down-structure is arranged so that radially inner peripheral edges thereof are overlapped with the respective turned-up portions of the inner carcass ply. It is further preferred that the skim rubber is arranged over an entire region where the outer carcass ply is overlapped with the turned-up portions of the inner carcass ply.

In the method according to the present invention, a reinforcement rubber having a crescent-like cross-section may be applied at a side region of the core, onto an inner surface of the inner carcass ply and, more precisely, also on an outer surface side of the inner liner.

In this instance, there may be applied a similar reinforcement rubber having a crescent-like cross-section, between the inner carcass ply and the outer carcass ply at a side region of the core, in place of the skim rubber.

With the method for producing tires according to the present invention, by turning-up the inner carcass ply radially outwards about the bead cores, the carcass ply is anchored in the same manner as in generally used tires, to provide a sufficiently improved tensile strength of the carcass ply in a product tire. Such improvement is further enhanced by the outer carcass ply which is adhered by vulcanization to the inner carcass ply through the skim rubber. It is thus possible to avoid degradation in lateral rigidity of the tire, and preserve a sufficient tensile strength of the carcass plies as required for large-sized tires.

According to the present invention, furthermore, by turning-up the carcass ply about the bead cores, it is possible not only to improve the rigidity of the bead cores, per se, as compared to the conventional bead of the above mentioned divided structure, but also to effectively restrain the carcass plies from displacement, deformation, etc., and to sufficiently reduce the thickness of the rubber layer to be arranged on the radially inner side of the bead cores. It is thus possible to realize a high rigidity in the bead portion of the product tire, and effectively avoid dislocation of the bead cores into the well of the rim during a run-flat running of the tire.

In the method according to the present invention, when the outer carcass ply of the down-structure is arranged so that radially inner peripheral edges thereof are overlapped with the respective turned-up portions of the inner carcass ply, it is possible to further improve the tensile strength of the carcass plies and the rigidity of the bead portions, and also to prevent occurrence of discontinuity of the rigidity at the tire bead portions or sidewall portions.

Thus, even large-sized tires, such as tires for trucks, buses or for off-road use, can be built on a core. In addition, the improved rigidity of the bead portions makes it possible to reduce the volume of the bead fillers to realize a tire that is light in weight, and suppress heat generation within the tire.

In this instance, when a skim rubber is arranged over an entire region where the outer carcass ply is overlapped with the turned-up portions of the inner carcass ply, a mutual contact of the respective ply cords in the overlapped region is prevented so as to effectively mitigate the risk of fretting fracture of these cords.

On the other hand, since the rigidity of the tire bead portions can be sufficiently improved, it is possible to realize a run-flat tire in which reinforcement rubbers are applied to the inner surface of the inner carcass ply in the side portions of the core. In addition or alternatively to the provision of such reinforcement rubbers, it is possible to realize a run-flat tire in which reinforcement rubbers are applied between the outer and inner carcass plies in the side portions of the core.

In the latter case, even when the skim rubber is removed from the region in which the reinforcement rubber is arranged, the outer and inner carcass plies are sufficiently adhered to each other by vulcanization, through the reinforcement rubber

The invention will be further described with reference to the accompanying drawings, wherein

FIGS. 1(a) through 1(d) are schematic perspective views showing the steps in the method according to one embodiment of the present invention;
FIG 2 is a schematic developed plan view showing one example of the inner carcass ply;
FIGS. 3(a) and 3(b) are schematic developed plan views showing further examples of the inner carcass ply;
FIGS. 4(a) and 4(b) are schematic sectional views showing the manner of turning-up the inner carcass ply;
FIG. 5 is a schematic perspective view showing the turned-up portion of the carcass ply;
FIG 6 is a schematic sectional view showing one example of arrangement of the reinforcement rubbers; and
FIG 7 is a schematic perspective view showing the prior art.

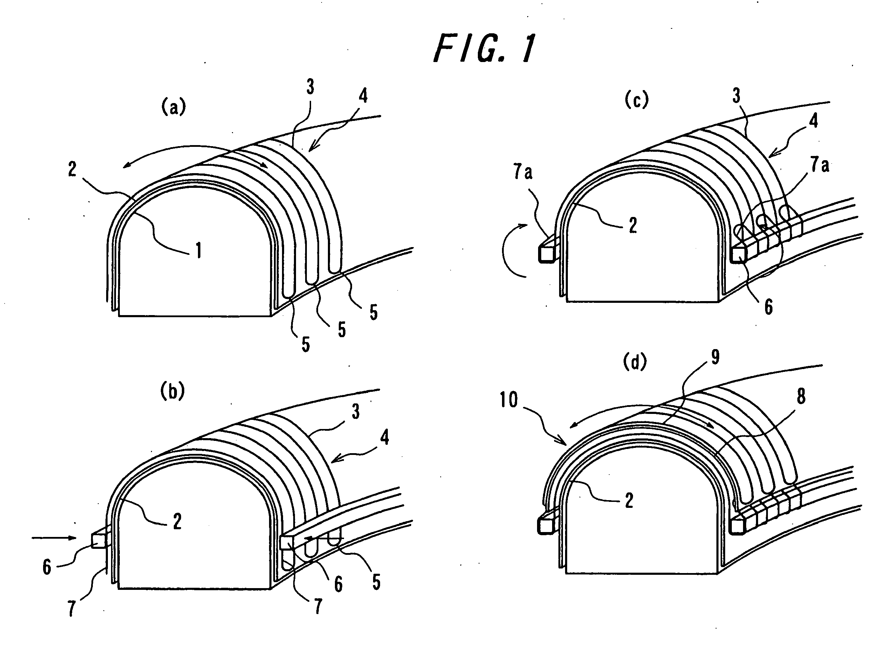

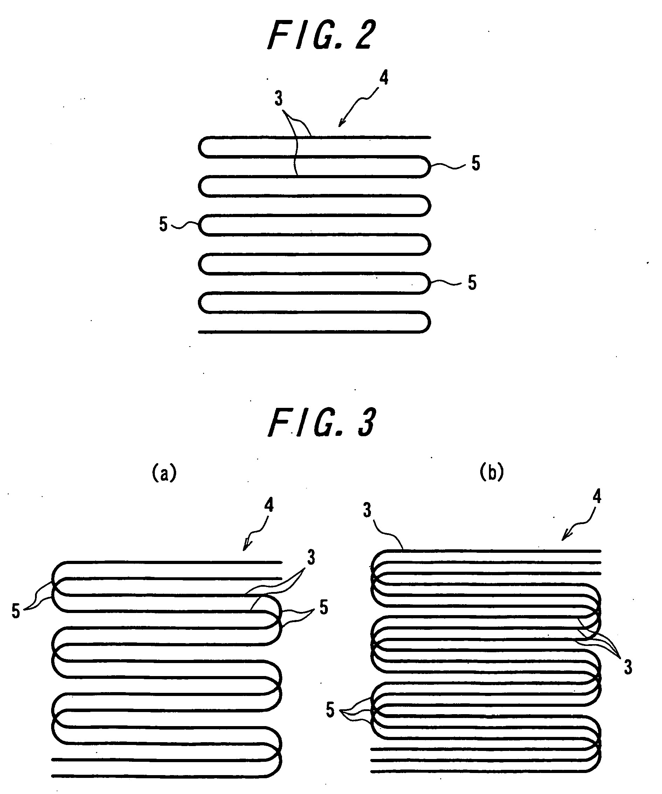

A preferred embodiment of the present invention is shown in FIG 1 in which a rigid core 1 of substantially toroidal shape has an outer surface previously applied with an inner liner 2 of a predetermined thickness. The inner liner 2 may be formed, for example, by a spiral or helical winding of the ribbon-like rubber strip and lamination of the strip winding layers. As shown in FIG 1(a), at least one carcass cord 3 comprised of an organic fiber material is applied onto the outer surface of the inner liner 2, from one side portion of the core 1 to the other side portion, so as to linearly extend in the meridian direction. At each side portion of the core 1, the carcass cord 3 is folded back in a U-shaped manner, while causing an indexing movement of the core 1 in a predetermined direction, over a predetermined angular range. These operations are repeated over an entire circumference of the core 1, so as to form an inner carcass ply 4, which is continuous in a zigzag manner, as shown in the developed view in FIG 2.

In this instance, it is preferred to use a carcass cord 3 which has been subjected to a dipping process for improving the adhesion to the rubber. The above-mentioned application of the carcass cord 3 may be performed by using an apparatus disclosed in Japanese Patent Application Laid-open Publication Nos. JP 2000-52448A (EP-0 962 304 A) and JP 2002-127268A. The apparatus disclosed in the former patent document includes a swinging feed mechanism for causing a reciprocating movement, in the meridian direction of the core 1, of the cord passage provided at the tip end of an arm, a pin for winding and supporting the carcass cord 3 at a folding back position in the reciprocating movement of the cord passage, and a pressure mechanism including a pressure member that is movable toward and away from the pins, for urging the wound portion of the carcass cord 3 against the core 1. The pressure mechanism follows the indexing movement of the core 1 to undergo a swinging movement in the indexing direction, and is returned to its initial position after the pin has been separated from the core.

The apparatus disclosed in the latter patent document serves to ensure that the folded back portion of the carcass cord is more positively applied to the core 1, and thus includes a pin for winding and supporting the carcass cord 3 at the folding back portion in the reciprocating movement of the cord passage, and a pressure mechanism that is movable toward and away from the pins, for urging the wound portion of the carcass cord 3 against the core 1. The pressure mechanism is comprised of a pressure block that follows the indexing movement of the core 1 to move in the indexing direction, as well as a movement suppression block that is movable by an amount corresponding to two pitches of the indexing movement of the core 1 while urging the wound portion of the carcass cord 3 against the core 1, the carcass cord having been already applied to the outer peripheral surface of the core 1.

The inner carcass ply 4 is formed as shown in the developed view of FIG 2, though it may be alternatively formed so that two or three carcass cords 3 are overlapped with each other at the folding back positions 5, as shown in the schematic developed plan view of FIGS. 3(a) or 3(b), or four or more carcass cords are overlapped with each other in a similar manner.

After the inner carcass ply 4 has been formed, as shown in FIG 1(b), annular bead cores 6 held by a bead setter or the like are positioned relative to predetermined locations in the side portions of the core 1. Subsequently, as shown in FIG 1(c), the inner peripheral portions 7 of the carcass ply 4, which are to be situated on the radially inner side of the bead cores 6, are turned-up radially outwards about the bead cores 6 so as to form turned-up portions 7a.

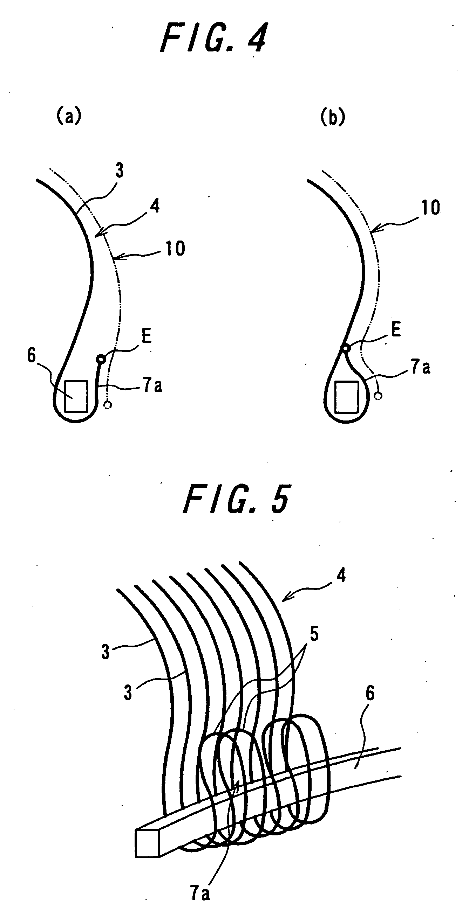

In this instance, the turning-up of the inner peripheral portions 7 in the inner carcass ply may be performed, for example, by a radial expansion deformation of bladders arranged in the inner peripheral portion of the core 1, or by successive operation of a mechanical expansion / contraction means, which is arranged in a predetermined storage position of the core 1, so that it is successively moved axially outwards and radially outwards. The turning-up of the inner peripheral portions 7 may be performed so that, as shown in a schematic sectional view in FIG 4(a), the turned-up edge E of the carcass ply 4 is spaced from the main body portion of the carcass ply 4 or, as shown in FIG 4(b), the turned-up edge E is alternatively in contact with the main body portion of the carcass ply 4.

In any of these cases, there may be arranged bead reinforcement rubbers, such as bead fillers having a thickness that is gradually reduced radially outwards, on the outer peripheral side of the bead core 6 and between the main body portion and the turned-up portion of the carcass ply 4.

FIG 5 is a perspective view showing the turned-up portion 7a of the carcass ply 4 such as that shown in FIG 3(a). This turned-up portion 7a includes carcass cords 3 which are crossed at their folding back portions so as to restrain each other, thereby further improving the withdrawal resistance of the carcass ply 4.

Subsequently, as shown in FIG 1(d), a skim rubber 8 comprised of a ribbon-like rubber strip is wound spirally or helically on the outer surface of the inner carcass ply 4, and an outer carcass ply 10 is applied onto the outer surface side of the skim rubber 8.
The outer carcass ply 10 may be formed in the same manner as the inner carcass ply 4, by applying a carcass cord 9 so as to extend in the meridian direction and folding back the carcass cord 9 at each side portion of the core 1. In this instance, the skim rubber 8 serves to prevent mutual contact of the inner carcass ply 4 and the outer carcass ply 10 with each other, thereby eliminating the risk of premature wear or fracture of the ply cords.

The formation of the outer carcass ply 10 also may be such as that shown in FIG 2 or FIG. 3(a) or 3(b). However, it is preferred that the outer carcass ply has an inner peripheral edge that is positioned, as shown by imaginary lines in FIGS. 4(a) and 4(b), at a location corresponding to any region in the turned-up portion 7a of the inner carcass ply 4.

When the inner and outer carcass plies 4, 10 are formed in the manner explained above, if the tire to be built is a run-flat tire, reinforcement rubbers of crescent-shaped cross-section may be arranged in each side portion of the core 1, at a location between the inner liner 2 and the inner carcass ply 4 and/or a location between the inner and outer carcass plies 4,10. Such reinforcement rubber may be formed by winding and laminating a ribbon-like rubber strip in desired regions, to have a desired cross-sectional shape.

In this instance, when reinforcement rubbers are interposed between the inner and outer carcass plies 4, 10, the reinforcement rubbers effectively contribute, at least in their regions, to provide an improved adhesion between these carcass plies through vulcanization. Thus, it is preferred to remove the skim rubber 8 from the region of the reinforcement rubbers, in view of avoiding increase in the weight and production cost of the tires.

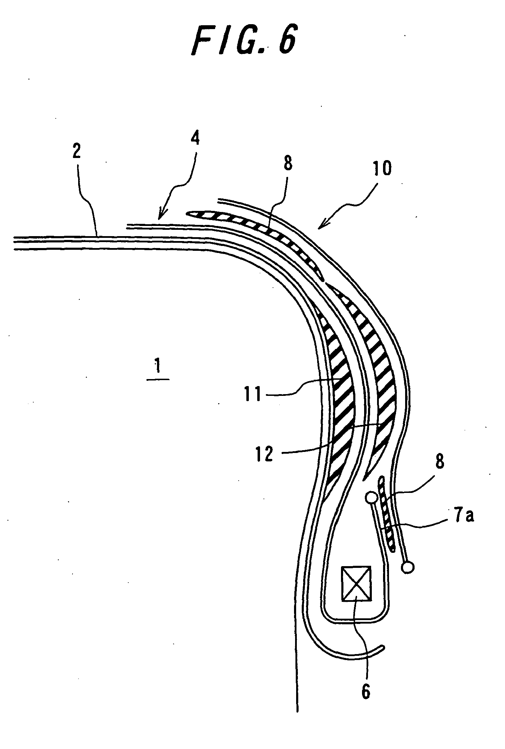

FIG 6 is a schematic sectional view showing an arrangement which includes the reinforcement rubbers at both locations. Reference numeral 11 denotes an inner side reinforcement rubber that is interposed between, and adhered to the inner liner 2 and the inner carcass ply 4, and reference numeral 12 denotes an outer side reinforcement rubber that is interposed between, and adhered to the inner carcass ply 4 and the outer carcass ply 10.

After the formation of the inner and outer carcass plies 4, 10 has been completed in the manner explained above, further tire constitutive members, such as belt layers, tread rubber, sidewall rubbers, rubber chafers, etc., which are not shown in the drawings, are formed and/or arranged on the outer side of the carcass plies 4, 10, so as to complete building of a desired green tire.

## Claims

1. A method for manufacturing tires, wherein at least one carcass ply is formed by continuously applying a carcass cord (3) onto an outer surface of a substantially toroidal core (1), over an entire periphery thereof, and various tire constitutive members are applied onto an outer surface of the carcass ply, so as to build a green tire, **characterized in that** the method comprises:
forming an inner carcass ply (4) by feeding a carcass cord (3) in a meridian direction of the core (1) and folding back the carcass cord at each side portion of the core;
turning-up each radially inner peripheral portion (7) of the inner carcass ply (4) radially outwards about a bead (6);
subsequently applying a skim rubber (8) onto an outer surface of the inner carcass ply (4), which has been formed with the turned-up portions (7a); and
applying an outer carcass ply (10) onto an outer surface of the skim rubber (8), by feeding a carcass cord (9) in the meridian direction of the core (1) and folding back the carcass cord at each side portion of the core.

2. A method as claimed in claim 1, further comprising arranging said outer carcass ply (10) so that radially inner peripheral edges thereof are overlapped with the respective turned-up portions (7a) of the inner carcass ply (4).

3. A method as claimed in claim 1 or 2, further comprising arranging said skim rubber (8) over an entire region where said outer carcass ply (10) is overlapped with the turned-up portions (7a) of the inner carcass ply (4).

4. A method as claimed in any of claims 1 to 3, further comprising applying a reinforcement rubber (11) onto an inner surface of the inner carcass ply (4) at side regions of the core (1), said reinforcement rubber having a crescent-like cross-section.

5. A method as claimed in any of claims 1 to 4, further comprising applying a reinforcement rubber (12) between the inner carcass ply (4) and the outer carcass ply (10) at side regions of the core (1), partly in place of said skim rubber (8), said reinforcement rubber having a crescent-like cross-section.

## Patentansprüche

1. Verfahren zum Herstellen von Reifen, wobei wenigstens eine Karkassenlage durch kontinuierliches Aufbringen eines Karkassenkords (3) auf eine Außenfläche eines im Wesentlichen kreisringförmigen Kerns (1), über einen gesamten Umfang desselben, geformt wird und mehrere Reifenbestandteile auf eine Außenflache der Karkassenlage aufgebracht werden, um so einen Reifenrohling aufzubauen, **dadurch gekennzeichnet, dass** das Verfahren Folgendes umfasst:
Formen einer inneren Karkassenlage (4) durch Zuführen eines Karkassenkords (3) in einer Meridianrichtung des Kerns (1) und Zurückfalten des Karkassenkords an jedem Seitenabschnitt des Kerns,
Hochschlagen jedes in Radialrichtung inneren Umfangsabschnitts (7) der inneren Karkassenlage (4) in Radialrichtung nach außen um eine Wulst (6),
anschließendes Aufbringen eines Abschöpfkautschuks (8) auf eine Außenfläche der inneren Karkassenlage (4), die mit den hochgeschlagenen Abschnitten (7a) geformt worden ist, und
Aufbringen einer äußeren Karkassenlage (10) auf eine Außenfläche des Abschöpfkautschuks (8), durch Zuführen eines Karkassenkords (9) in der Meridianrichtung des Kerns (1) und Zurückfalten des Karkassenkords an jedem Seitenabschnitt des Kerns.

2. Verfahren nach Anspruch 1, das ferner umfasst, die äußere Karkassenlage (10) so anzuordnen, dass die in Radialrichtung inneren Umfangskanten derselben mit den jeweiligen hochgeschlagenen Abschnitten (7a) der inneren Karkassenlage (4) überlappt werden.

3. Verfahren nach Anspruch 1 oder 2, das feiner umfasst, den Abschöpfkaütschuk (8) über einem gesamten Bereich anzuordnen, wo die äußere Karkassenlage (10) mit den hochgeschlagenen Abschnitten (7a) der inneren Karkassenlage (4) überlappt wird.

4. Verfahren nach einem der Ansprüche 1 bis 3, das ferner umfasst, an Seitenbereichen des Kerns (1) einen Verstärkungskautschuk (11) auf eine Innenfläche der inneren Karkassenlage (4) aufzubringen, wobei der Verstärkungskautschuk einen halbmondartigen Querschnitt hat.

5. Verfahren nach einem der Ansprüche 1 bis 4, das ferner umfasst, an Seitenbereichen des Kerns (1), teilweise anstelle des Abschöpfkautschuks (8), einen Verstärkungskautschuk (12) zwischen der inneren Karkassenlage (4) und der äußeren Karkassenlage (10) aufzubringen, wobei der Verstärkungskautschuk einen halbmondartigen Querschnitt hat.

## Revendications

1. Procédé de fabrication de bandages pneumatiques, dans lequel au mois une nappe de carcasse est formée en appliquant de manière continue un câblé de carcasse (3) sur une surface externe d'une tringle pratiquement toroïdale (1), au-delà de l'ensemble de sa périphérie, différents éléments constitutifs du bandage pneumatique étant appliqués sur une surface externe de la nappe de carcasse, de sorte à construire un bandage pneumatique vert, **caractérisé en ce que** le procédé comprend les étapes ci-dessous :
formation d'une nappe de carcasse interne (4) en transférant un câblé de carcasse (3) dans une direction méridienne de la tringle (1) et en repliant le câblé de carcasse au niveau de chaque partie latérale de la tringle ;
retournement de chaque partie périphérique radialement interne (7) de la nappe de carcasse interne (4) radialement vers l'extérieur autour d'un talon (6) ;
application subséquente d'une gomme de revêtement (8) sur une surface externe de la nappe de carcasse interne (4), ayant été formée avec les parties retournées (7a) ; et
application d'une nappe de carcasse externe (10) sur une surface externe de la gomme de revêtement (8) en transférant un câblé de carcasse (9) dans la direction méridienne de la tringle (1) et en retournant le câblé de carcasse au niveau de chaque partie latérale de la tringle.

2. Procédé selon la revendication 1, comprenant en outre l'étape d'agencement de ladite nappe de carcasse externe (10) de sorte que les parties retournées respectives (7a) de la nappe de carcasse interne (4) sont chevauchées par les bords périphériques radialement internes.

3. Procédé selon les revendications 1 ou 2, comprenant en outre l'étape d'agencement de ladite gomme de revêtement (8) au-delà de l'ensemble d'une région dans laquelle ladite nappe de carcasse externe (10) est chevauchée par les parties retournées (7a) de la nappe de carcasse interne (4).

4. Procédé selon l'une quelconque des revendications 1 à 3, comprenant en outre l'étape d'application d'une gomme de renforcement (11) sur une surface interne de la nappe de carcasse interne (4), au niveau de régions latérales de la tringle (1), ladite gomme de renforcement ayant une section transversale en forme de croissant.

5. Procédé selon l'une quelconque des revendications 1 à 4, comprenant en outre l'étape d'application d'une gomme de renforcement (12) entre la nappe de carcasse interne (4) et la nappe dé carcasse externe (10) au niveau de régions latérales de la tringle (1), pour remplacer en partie ladite gomme de revêtement (8), ladite gomme de renforcement ayant une section transversale en forme de croissant.
